# EUROPÄISCHE PATENTANMELDUNG

(11) **EP 2 216 457 A2**
(43) Veröffentlichungstag der Anmeldung: **11.08.2010**
(21) Anmeldenummer: 10150812.5
(22) Anmeldetag: 15.01.2010
(51) Int. Cl.: E04B 9/18, F16B 37/04

(54) **Schienenanbindesystem mit einer Montageschiene und einem Anbindeteil zum Anbinden der Montageschiene an einem Träger**

(30) Priorität: 04.02.2009 DE 102009000608
(71) Anmelder: HILTI Aktiengesellschaft, 9494 Schaan (LI)
(72) Erfinder: Merhar, Thomas, 9494 Schaan (LI); Lippuner, Ralph, 9470 Buchs (CH)

(57) **Zusammenfassung**

Schienenanbindesystem (21) mit einer Montageschiene (32) und zwei Anbindeteilen (22) zum Anbinden der Montageschiene (32) an einem Träger (16). Die Montageschiene (32) weist eine entlang der Längserstreckung der Montageschiene (32) verlaufende Montageöffnung (36) mit einer quer zu der Längserstreckung verlaufenden lichten Breite (B) und in einer der Profilwände (34) mehrere, zueinander in Längserstreckung der Montageschiene (32) beabstandete Befestigungsöffnungen (37) auf. Die Befestigungsöffnungen (37) weisen jeweils eine in Richtung der Längserstreckung der Montageschiene (32) verlaufende lichte Länge (L) und eine quer dazu verlaufende lichte Breite auf. Jedes Anbindeteil (22) weist einen Anlageabschnitt (23), einen Halteabschnitt (24) und einen Festlegeabschnitt (27) auf. Der Festlegeabschnitt (27; 47; 107) weist einen in die Montageschiene (32) einführbaren und zum Hintergreifen der Ränder der Montageöffnung (36) verdrehbaren Hintergreifabschnitt (28) auf, wobei die Länge des Hintergreifabschnitts (28) grösser als die lichte Breite der Montageöffnung (36), jedoch kleiner als die lichte Länge (L) einer der Befestigungsöffnungen (37) ist, und wobei die Breite (N) des Hintergreifabschnitts (28) kleiner als die lichte Breite der der Montageöffnung (36) und kleiner als die lichte Breite einer Befestigungsöffnung (37) ist.

## Beschreibung

Die Erfindung betrifft ein Schienenanbindesystem mit einer Montageschiene und einem Anbindeteil zum Anbinden der Montageschiene an einem Träger, der im Oberbegriff des Patentanspruchs 1 genannten Art.

Im Gebiet der Haustechnik werden Schienensysteme eingesetzt, an denen Leitungen z. B. für Wasser-, Heizung-, Lüftung-, Klima- und/oder Elektroinstallationen einfach über entsprechende Anbindevorrichtungen, wie beispielsweise Schienenmuttern festlegbar sind.

Für diesen Zweck bevorzugt ist eine so genannte C-förmige Montageschiene, wie sie beispielsweise aus der DE 87 15 256 U1 bekannt ist. Diese Montageschiene weist als Profilwände zwei parallel zueinander angeordnete Seitenwände und eine diese Seitenwände verbindende Rückwand auf. Der von der Montageschiene umschlossene Innenraum ist über eine entlang der Längserstreckung der Montageschiene verlaufende Montageöffnung von aussen her zugänglich, welche der Rückwand gegenüberliegend angeordnet ist und welche von Rändern seitlich begrenzt wird. Die Montageöffnung weist eine quer zu der Längserstreckung der Montageschiene verlaufende lichte Breite auf, die kleiner als die entsprechende Innenabmessung des Innenraums der Montageschiene ist. In der Rückwand der Montageschiene sind weiter mehrere, zueinander in Längserstreckung der Montageschiene beabstandete Befestigungsöffnungen vorgesehen, durch die ein Befestigungsmittel, wie z. B. ein Spreizdübel oder eine Schraube, hindurchführbar ist, womit die Montageschiene beispielsweise direkt an einem Bauteil, wie eine Decke oder eine Wand, anliegend festlegbar ist. Diese Befestigungsöffnungen sind als Langlöcher ausgebildet und weisen eine in Richtung der Längserstreckung der Montageschiene verlaufende lichte Länge und eine quer dazu verlaufende lichte Breite auf. Mit einer ein Hintergreifteil aufweisenden Anbindevorrichtung, z. B. einer Schienenmutter, die durch die Montageöffnung an der Montageschiene festlegbar ist, lassen sich Rohrschellen oder Abhängeeinrichtungen an der Montageschiene festlegen. Zum Einführen des Hintergreifteils in den von der Montageschiene ausgebildeten Innenraum weist das Hintergreifteil vorteilhaft eine Breite, die kleiner als die lichte Breite der Montageöffnung ist, und eine Länge auf, die grösser als die lichte Breite der Montageöffnung ist. Nach dem Einführen des Hintergreifteils wird dieses im Innenraum der Montageschiene verdreht und somit in eine Stellung zum Hintergreifen der Ränder der Montageöffnung gebracht.

Insbesondere bei Industriebauten besteht die Tragkonstruktion zumeist aus Stahlträgern mit einer I- oder H-Form. Zum Festlegen der Montageschiene an einem Träger ist aus der DE 299 15 435 U1 ein Schienenanbindesystem mit einer Spannpratze als Anbindeteil bekannt, wobei das Anbindeteil einen Anlageabschnitt zur Anlage an der Montageschiene, einen Halteabschnitt zum Halten des Schienenanbindesystems an einem Abschnitt eines Trägers und eine U-förmige Gewindestange als Festlegeabschnitt zur Festlegung des Anbindeteils an der Montageschiene und zum Verspannen des Schienenanbindesystems aufweist. Die freien Enden der U-förmigen Gewindestange sind jeweils mit einem Gewindeabschnitt versehen, an dem nach dem Hindurchführen der Gewindestange durch entsprechende Öffnungen in der Spannpratze Muttern aufgeschraubt werden. Mit den Muttern wird die Montageschiene mit dem Träger in Anlage gebracht und das gesamte Schienenanbindesystem lösbar verspannt. Die Montageöffnung der Montageschiene kann in unterschiedlichen Ausrichtungen in Bezug auf den Träger ausgerichtet werden.

Nachteilig an dieser bekannten Lösung ist, dass das Schienenanbindesystem zur Montage vorgängig demontiert werden muss und auf jeder Seite des Trägers jeweils zwei Muttern verspannt werden müssen, was aufwändig ist.

Auf dem Markt sind Spannpratzen erhältlich, welche über ein die Montageschiene durch die Montageöffnung und eine gegenüberliegende Befestigungsöffnung in der Rückwand durchdringendes Befestigungsmittel sowie ein an der gegenüberliegenden Rückwand der Montageschiene angeordnetes Plattenelement mit der Montageschiene ein Schienenanbindesystem ausbilden. Mit diesem Schienenanbindesystem ist die Montageschiene in Bezug auf den Träger mit der Montageöffnung nach oben und nach unten festlegbar.

Nachteilig an dieser bekannten Lösung ist, dass für unterschiedliche Montageschienenhöhen und Trägerabmessungen unterschiedlich ausgebildete Teile benötigt werden, was einen unerwünschten hohen logistischen Aufwand für den Anwender und Hersteller darstellt. Zudem muss die Montageschiene von zwei einander gegenüberliegenden Seiten zugänglich sein, was beispielsweise bei einer Anordnung der Montageschiene auf einem Träger nicht immer gewährleistet ist.

Weiter sind auf dem Markt auch Schienenanbindesysteme erhältlich, bei denen das Anbindeteil mit einem Festlegeabschnitt direkt in der Montageöffnung der Montageschiene eingreift und deren Ränder im verspannten Zustand hintergreift. An dem Halteabschnitt dieses Anbindeteils ist eine Spannschraube vorgesehen, deren freies Ende beim Verspannen des Schienenanbindesystems mit einem Abschnitt des Trägers in Anlage kommt.

Nachteilig an dieser bekannten Lösung ist, dass die Montageschiene nur aufliegend auf einem Abschnitt des Trägers mit der Montageöffnung in Bezug auf den Träger nach unten angeordnet werden kann.

Aufgabe der Erfindung ist es, ein Schienenanbindesystem zu schaffen, das einfach handhabbar und eine flexible Ausrichtung der festzulegenden Montageschiene am Träger erlaubt.

Die Aufgabe ist durch die Merkmale des unabhängigen Anspruchs gelöst. Vorteilhafte Weiterbildungen sind in den Unteransprüchen dargelegt.

Gemäss der Erfindung weist der Festlegeabschnitt des Anbindeteils einen in die Montageschiene einführbaren und zum Hintergreifen der Ränder der Montageöffnung verdrehbaren Hintergreifabschnitt auf, wobei die Länge des Hintergreifabschnitts grösser als die lichte Breite der Montageöffnung, jedoch kleiner als die lichte Länge einer der Befestigungsöffnungen ist und wobei die Breite des Hintergreifabschnitts kleiner als die lichte Breite der Montageöffnung und kleiner als die lichte Breite einer Befestigungsöffnung ist.

Aufgrund der Ausgestaltung des Hintergreifabschnitts kann der Festlegeabschnitt sowohl durch die Montageöffnung wie auch durch eine der Befestigungsöffnung zum Hintergreifen der entsprechenden Ränder in den von der Montageschiene aufgespannten Innenraum eingeführt werden. Die Ausrichtung der Montageschiene kann in Bezug auf den Träger derart an diesem angeordnet werden, dass deren Montageöffnung zu diesem hingewandt oder von diesem abgewandt zu liegen kommt. Für unterschiedliche Grössen von Montageschienen oder Trägerabmessungen können weitgehend gleiche Teile verwendet werden, womit der logistische Aufwand bei der Montage, Lagerung und Herstellung bei der Verwendung des erfindungsgemässen Schienenanbindesystems massgeblich reduziert ist. Zudem ist die Montage des erfindungsgemässen Schienenanbindesystems einfach und schnell durchführbar.

Vorzugsweise ist an einer, dem Anbindeteil zugewandten Seite des Hintergreifabschnitts ein Absatz vorgesehen, dessen Breite maximal der Breite des Hintergreifabschnitts und dessen Länge maximal der lichten Breite der Montageöffnung entspricht. Üblicherweise weisen die Befestigungsöffnungen eine lichte Breite auf, die kleiner als die lichte Breite der Montageöffnung ist. Weiter sind die freien Enden der die Montageöffnung begrenzenden Ränder nach innen umgebogen. Bei einer Anordnung des Anbindeteils an der die Montageöffnung aufweisenden Seite der Montageschiene kommen im verspannten Zustand des Schienenanbindesystems die Spannflächen des Hintergreifabschnitts mit den die Montageöffnung begrenzenden Rändern in Anlage und der Absatz kommt in dem Raum zwischen den die Montageöffnung begrenzenden Rändern zu liegen. Bei einer Anordnung des Anbindeteils an der die Befestigungsöffnungen aufweisenden Seite der Montageschiene kommen im verspannten Zustand des Schienenanbindesystems die Spannflächen des Absatzes mit den die entsprechend Befestigungsöffnung begrenzenden Rändern in Anlage. Der Absatz an dem Hintergreifabschnitt gleicht somit die unterschiedlichen Klemmhöhen bei der Montageöffnung und bei den Befestigungsöffnungen aus.

Bevorzugt sind der Hintergreifabschnitt und das Anbindeteil einteilig und besonders vorteilhaft als Stanz-/Biegeteil ausgebildet. Derartige Anbindeteile sind einfach handhabbar und wirtschaftlich herstellbar. Alternativ ist das Anbindeteil aus Metallguss gefertigt.

In einer erfindungsgemässen Alternative ist der Hintergreifabschnitt mit einem Schaft verbunden, der durch eine Durchführöffnung in einem Anbindeelement des Anbindeteils hindurchführbar ist. Das Anbindeelement ist ein separates Teil, das den Anlageabschnitt und dazu beabstandet den Halteabschnitt aufweist. Besonders vorteilhaft ist der Hintergreifabschnitt ein Kopfteil einer Hammerkopfschraube. Die Durchführöffnung für den Schaft ist zwischen dem Anlageabschnitt und dem Halteabschnitt des Anbindeelementes vorgesehen. Mittels einer auf den Schaft angeordneten Mutter wird das erfindungsgemässe Schienenanbindesystem verspannt.

Vorzugsweise ist die Durchführöffnung ein Langloch, dessen Längserstreckung parallel zu einer von dem Anlageabschnitt zu dem Halteabschnitt verlaufende Richtung verläuft, womit das Schienenanbindesystem an eine Vielzahl von unterschiedlichen Trägerabmessungen mit einer Art von Anbindeteil abgedeckt werden kann.

Bevorzugt ist der Schaft an einander gegenüberliegenden Seiten mit einer Abflachung versehen und der Abstand dieser Abflachungen zueinander entspricht maximal der Breite der Durchführöffnung im Anbindeelement, womit das Anbindeelement verdrehsicher an dem Schaft geführt ist.

Vorzugsweise sind von dem Anlageabschnitt zwei Umgreifabschnitte zum bereichsweisen Umgreifen zweier einander gegenüberliegenden Aussenränder der Montageschiene vorgesehen, deren lichter Abstand zumindest dem Abstand dieser Ränder der Montageschiene entspricht. Die Umgreifabschnitte gewährleisten eine vorteilhafte Führung und Ausrichtung des Anbindeteils an der Montageschiene im verspannten Zustand des Schienenanbindesystems.

Die Erfindung wird nachstehend anhand von Ausführungsbeispielen näher erläutert. Es zeigen:
- Fig. 1: Ein erstes Ausführungsbeispiel eines Schienenanbindesystems in einem Teillängsschnitt;
- Fig. 2: einen Querschnitt nur durch die Montageschiene gem. Linie II-II in Fig. 1;
- Fig. 3: einen Querschnitt gem. Linie II-II in Fig. 1 mit einem in der Montageöffnung der Montageschiene angeordneten Anbindeteil;
- Fig. 4: einen Querschnitt analog Fig. 3 mit einem in einer Befestigungsöffnung der Montageschiene angeordneten Anbindeteil;
- Fig. 5: ein zweites Ausführungsbeispiel eines Anbindeteils in einer Frontalansicht;
- Fig. 6: das Anbindeteil gem. Fig. 5 in Seitenansicht;
- Fig. 7: ein drittes Ausführungsbeispiel eines Anbindeteils in einer Frontalansicht;
- Fig. 8: das Anbindeteil gem. Fig. 7 in Seitenansicht;
- Fig. 9: das Anbindeteil gem. Fig. 7 im Grundriss;
- Fig. 10: ein viertes Ausführungsbeispiel eines Schienenanbindesystems in einer perspektivischen Darstellung; und
- Fig.11: ein fünftes Ausführungsbeispiel eines Anbindeteils in einer perspektivischen Darstellung.

Grundsätzlich sind in den Figuren gleiche Teile mit den gleichen Bezugszeichen versehen.

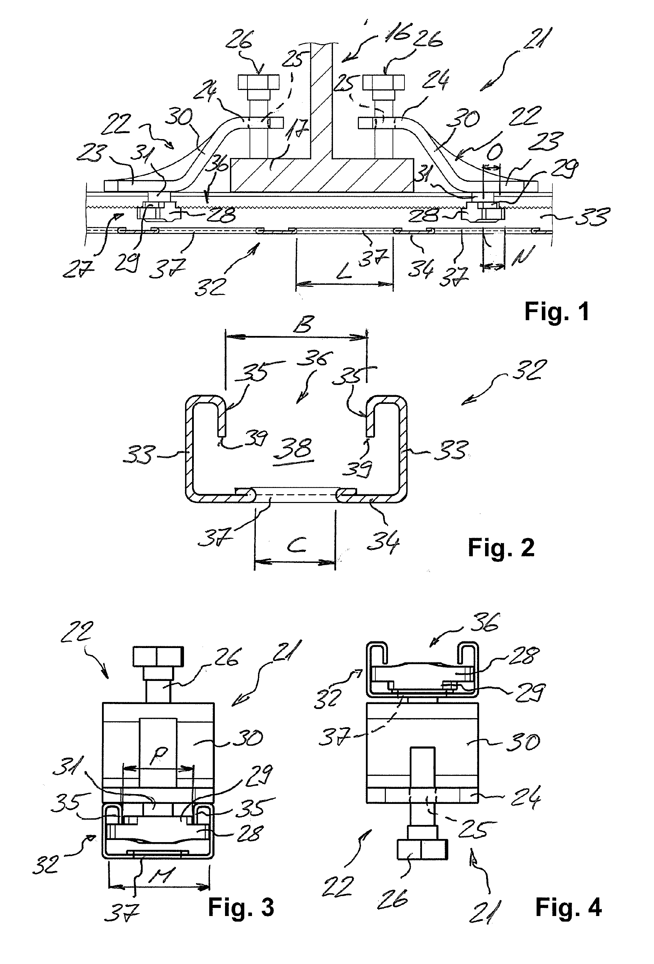

Das in den Figuren 1 bis 4 dargestellte Schienenanbindesystem 21 zum Anbinden einer Montageschiene 32 an einem Träger weist zwei Anbindeteile 22 und eine Montageschiene 32 auf.

Die Montageschiene 32 weist als Profilwände zwei einander gegenüberliegende Seitenwände 33, eine diese Seitenwände 33 verbindende Rückwand 34 sowie dieser Rückwand 34 gegenüberliegend eine von Rändern 35 begrenzte, in der Längserstreckung der Montageschiene 32 verlaufende Montageöffnung 36 auf. Die Montageöffnung 36 weist eine quer zu der Längserstreckung der Montageschiene 32 verlaufende lichte Breite B auf, welche durch die nach innen umgebogenen freien Enden 39 der Ränder 35 definiert ist. Die freien Enden 39 der Ränder 35 sind mit einer Zahnung versehen. In der Rückwand 34 sind mehrere, zueinander in Längserstreckung der Montageschiene 32 beabstandete Befestigungsöffnungen 37 vorgesehen, die jeweils eine in Richtung der Längserstreckung der Montageschiene 32 verlaufende lichte Länge L und eine quer dazu verlaufende lichte Breite C aufweisen. Die Befestigungsöffnungen 37 weisen Ränder auf, die in diesem Ausführungsbeispiel vollständig umgebördelt sind. Die Profilwände umgeben einen von der Montageschiene 32 umgebenen Innenraum 38, der einerseits durch die Montageöffnung 36 und andererseits durch die Befestigungsöffnungen 37 von aussen her zugänglich ist.

Jedes Anbindeteil 22 weist einen Anlageabschnitt 23 zur Anlage an der Montageschiene 32, einen Halteabschnitt 24 zum Halten des Schienenanbindesystems 21 an einem Flansch 17 als Abschnitt eines Trägers 16 und einen Festlegeabschnitt 27 zur Festlegung des Anbindeteils 22 an der Montageschiene 32 auf. In dem Halteabschnitt 24 ist eine mit einem Innengewinde versehene Durchführbohrung 25 vorgesehen, in welcher eine Spannschraube 26 eingeschraubt ist. Der Anlageabschnitt 23 und der Halteabschnitt 24 sind über einen Verbindungsabschnitt 30 miteinander verbunden. Der Anlageabschnitt 23 spannt eine Ebene auf, die zu einer von dem Halteabschnitt 24 aufgespannten Ebene beabstandet ist.

Der Festlegeabschnitt 27 des Anbindeteils 22 weist einen in den Innenraum 38 der Montageschiene 32 einführbaren und zum Hintergreifen der Ränder 35 der Montageöffnung 36 der Montageschiene 32 verdrehbaren Hintergreifabschnitt 28 auf. Die Länge M des Hintergreifabschnitts 28 ist grösser als die lichte Breite B der Montageöffnung 36, jedoch kleiner als die lichte Länge L einer der Befestigungsöffnungen 37. Die Breite N des Hintergreifabschnitts 28 ist kleiner als die lichte Breite B der Montageöffnung 36 und kleiner als die lichte Breite C einer Befestigungsöffnung 37. An einer, dem Anbindeteil 22 zugewandten Seite des Hintergreifabschnitts 28 ist ein Absatz 29 vorgesehen, dessen Breite O maximal der Breite N des Hintergreifabschnitts 28 und dessen Länge P maximal der lichten Breite B der Montageöffnung 36 entspricht. Der Hintergreifabschnitt 28 ist über einen Schaft 31 beabstandet zu dem Anlageabschnitt 23 und somit einteilig mit dem Anbindeteil 22 ausgebildet.

In der Fig. 3 ist das Anbindeteil 22 an der die Montageöffnung 36 aufweisenden Seite der Montageschiene 32 angeordnet, wobei die Spannflächen des Hintergreifabschnitts 28 mit den freien Enden 39 der Ränder 35 der Montageschiene 32 in Anlage sind. Der an dem Hintergreifabschnitt 28 vorgesehene Absatz 29 kommt in den Raum zwischen den Rändern 35 zu liegen.

In der Fig. 4 ist das Anbindeteil 22 an der die Befestigungsöffnungen 37 aufweisenden Seite der Montageschiene 32 angeordnet, wobei die Spannflächen des an dem Hintergreifabschnitt 28 vorgesehene Absatzes 29 mit den die entsprechende Befestigungsöffnung 37 begrenzenden Rändern in Anlage sind.

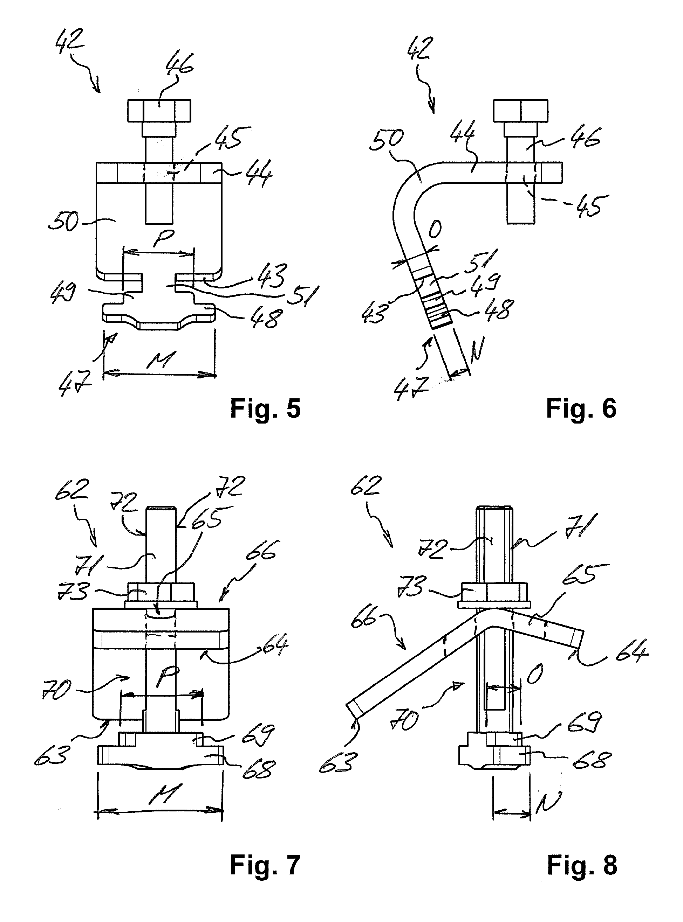

Das in den Figuren 5 und 6 gezeigte Ausführungsbeispiel eines Anbindeteils 42 ist ein Stanz-/Biegeteil. Dieses Anbindeteil 42 weist ebenfalls einen Anlageabschnitt 43 zur Anlage an der Montageschiene 32, einen Halteabschnitt 44 zum Halten des Schienenanbindesystems an einem Flansch 17 als Abschnitt eines Trägers 16 und einen Festlegeabschnitt 47 zur Festlegung des Anbindeteils 42 an der Montageschiene 32 auf. In dem Halteabschnitt 44 ist eine mit einem Innengewinde versehene Durchführbohrung 45 vorgesehen, in welcher eine Spannschraube 46 eingeschraubt ist. Der Anlageabschnitt 43 und der Halteabschnitt 44 sind über einen gebogenen Verbindungsabschnitt 50 miteinander verbunden, der einen spitzen Winkel von weniger als 90° einschliesst.

Auch dieser Festlegeabschnitt 47 weist einen Hintergreifabschnitt 48 auf, wobei die Länge M des Hintergreifabschnitts 48 grösser als die lichte Breite B einer Montageöffnung einer Montageschiene, welche mit dem Anbindeteil 42 ein Schienenanbindesystem bildet, jedoch kleiner als die lichte Länge L einer der Befestigungsöffnungen der entsprechenden Montageschiene ist. Die Breite N des Hintergreifabschnitts 48 ist kleiner als die lichte Breite B der Montageöffnung und kleiner als die lichte Breite C einer Befestigungsöffnung 37 der entsprechenden Montageschiene. An einer, dem Anbindeteil 42 zugewandten Seite des Hintergreifabschnitts 48 ist ein Absatz 49 vorgesehen, dessen Breite O maximal der Breite N des Hintergreifabschnitts 48 und dessen Länge P maximal der lichten Breite B der Montageöffnung der entsprechenden Montageschiene entspricht. Der Hintergreifabschnitt 48 ist über einen Verbindungsabschnitt 51 beabstandet zu dem Anlageabschnitt 43 und somit einteilig mit dem Anbindeteil 42 ausgebildet.

In den Figuren 7 bis 9 ist ein mehrteiliges Anbindeteil 62 dargestellt, das ein Anbindeelement 66 und eine Hammerkopfschraube 70 aufweist. Das Anbindeelement 66 ist ein Stanz-/Biegeteil mit einer Biegung, wobei die Schenkel des Anbindeelementes 66 einen stumpfen Winkel einschliessen. Die eine Endkante des Anbindeelementes 66 bildet den Anlageabschnitt 63 des Anbindeteils 62, wobei die gegenüberliegende Endkante des Anbindeelementes 66 den Halteabschnitt 64 des Anbindeteils 62 bildet. Zwischen dem Anlageabschnitt 63 und dem Halteabschnitt 64 ist eine als Langloch ausgebildete Durchführöffnung 65 vorgesehen, deren Längserstreckung parallel zu einer von dem Anlageabschnitt 63 zu dem Halteabschnitt 64 verlaufenden Richtung verläuft.

Der Hammerkopf der Hammerkopfschraube 70 bildet den Hintergreifabschnitt 68 des Anbindeteils 62. Auch von diesem Hintergreifabschnitt 68 ist ein Absatz 69 vorgesehen. Der Hintergreifabschnitt 68 wie auch der Absatz 69 ist entsprechend der zuvor beschriebenen Ausgestaltungen ausgebildet. Einteilig mit dem Hintergreifabschnitt 68 beziehungsweise mit dem Absatz 69 ist ein zumindest bereichsweise mit einem Gewinde versehener Schaft 71 vorgesehen, der an zwei einander gegenüberliegenden Seiten mit Abflachungen 72 versehen ist. Der Abstand A dieser Abflachungen 72 zueinander entspricht maximal der Breite E der Durchführöffnung 65 im Anbindeelement 66.

Der Schaft 71 ist durch die Durchführöffnung 65 im Anbindeelement 66 hindurchgeführt. Auf dem Gewinde des Schafts 71 ist eine Mutter 73 vorgesehen, über die das Schienenanbindesystem nach dem Positionieren des Hintergreifabschnitts 68 in der Montageschiene verspannbar ist.

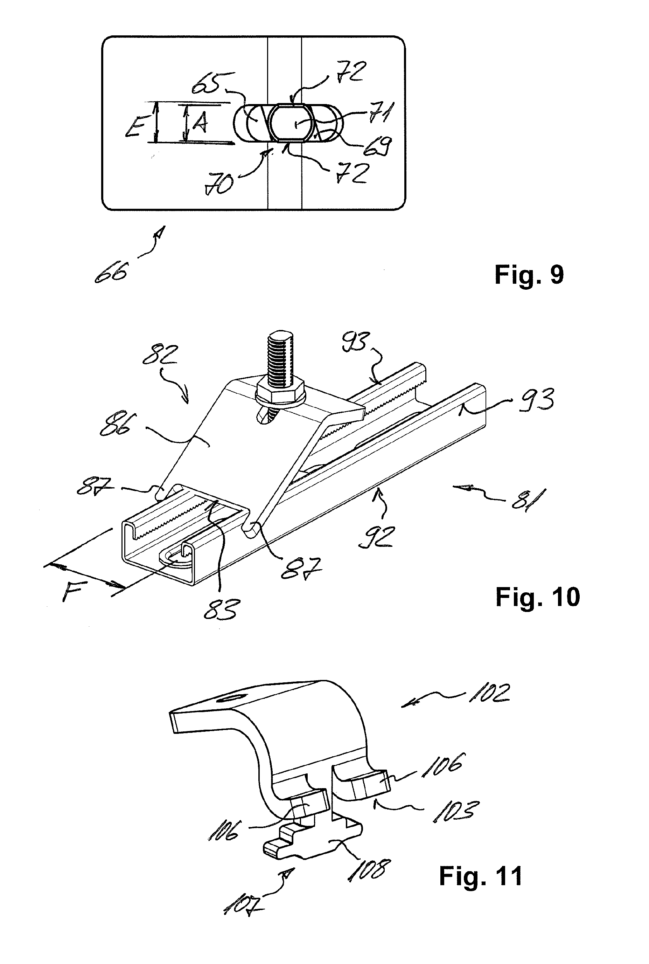

Das Anbindeteil 82 des in der Figur 10 dargestellten Schienenanbindesystems 81 unterscheidet sich von dem zuvor beschriebenen Anbindeteil 62 lediglich dadurch, dass von dem Anlageabschnitt 83 des Anbindeelementes 86 in der gleichen Ebene zwei Umgreifabschnitte 87 zum bereichsweisen Umgreifen zweier einander gegenüberliegenden Aussenränder 93 der Montageschiene 92 vorgesehen sind, deren lichter Abstand grösser als der Abstand F dieser Ränder 93 der Montageschiene 92 ist.

Das Anbindeteil 102 gemäss der Figur 11 ist im Wesentlichen einteilig und wie das in den Figuren 5 und 6 gezeigte Anbindeteil 42 als Stanz-/Biegeteil ausgebildet. Das hier gezeigte Anbindeteil 102 unterscheidet sich jedoch in der Ausgestaltung seines Anlageabschnitts 103, der durch zwei nach aussen abragende Nasen 106 gebildet wird. Zwischen den Nasen 106 ragt der Festlegeabschnitt 107 mit dem Hintergreifabschnitt 108 ab.

## Patentansprüche

1. Schienenanbindesystem mit einer Montageschiene (32; 92) und zumindest einem Anbindeteil (22; 42; 62; 82; 102) zum Anbinden der Montageschiene (32; 92) an einem Träger (16), wobei
die Montageschiene (32; 92) eine von Rändern (35) begrenzte, entlang der Längserstreckung der Montageschiene (32; 92) verlaufende Montageöffnung (36) mit einer quer zu der Längserstreckung der Montageschiene verlaufenden lichten Breite (B) und in zumindest einer der Profilwände (34) mehrere, zueinander in Längserstreckung der Montageschiene (32; 92) beabstandete Befestigungsöffnungen (37) aufweist, die jeweils eine in Richtung der Längserstreckung der Montageschiene (32; 92) verlaufende lichte Länge (L) und eine quer dazu verlaufende lichte Breite (C) aufweisen, und wobei
das Anbindeteil (22; 42; 62; 82; 102) einen Anlageabschnitt (23; 43; 63; 83; 103) zur Anlage an der Montageschiene (32; 92), einen Halteabschnitt (24; 44; 64) zum Halten des Schienenanbindesystems (21; 81) an einem Abschnitt (17) des Trägers (16) und einen Festlegeabschnitt (27; 47; 107) zur Festlegung des Anbindeteils (22; 42; 62; 82; 102) an der Montageschiene (32; 92) aufweist, **dadurch gekennzeichnet, dass**
der Festlegeabschnitt (27; 47; 107) des Anbindeteils (22; 42; 62; 82; 102) einen in die Montageschiene (32; 92) einführbaren und zum Hintergreifen der Ränder (35) der Montageöffnung (36) verdrehbaren Hintergreifabschnitt (28; 48; 68; 108) aufweist, wobei die Länge (M) des Hintergreifabschnitts (28; 48; 68; 108) grösser als die lichte Breite (B) der Montageöffnung (36), jedoch kleiner als die lichte Länge (L) einer der Befestigungsöffnungen (37) ist, und wobei
die Breite (N) des Hintergreifabschnitts (28; 48; 68; 108) kleiner als die lichte Breite (B) der Montageöffnung (36) und kleiner als die lichte Breite (C) einer Befestigungsöffnung (37) ist.

2. Schienenanbindesystem nach Anspruch 1, **dadurch gekennzeichnet, dass** an einer, dem Anbindeteil (22; 42; 62; 82; 102) zugewandten Seite des Hintergreifabschnitts (28; 48; 68; 108) ein Absatz (29; 49; 69) vorgesehen ist, dessen Breite (O) maximal der Breite (N) des Hintergreifabschnitts (28; 48; 68; 108) und dessen Länge (P) maximal der lichten Breite (B) der Montageöffnung (36) entspricht.

3. Schienenanbindesystem nach Anspruch 1 oder 2, **dadurch gekennzeichnet, dass** der Hintergreifabschnitt (28; 48; 108) und das Anbindeteil (22; 42; 82; 102) einteilig sind.

4. Schienenanbindesystem nach Anspruch 1 oder 2, **dadurch gekennzeichnet, dass** der Hintergreifabschnitt (68) mit einem Schaft (71) verbunden ist, der durch eine Durchführöffnung (65) in einem Anbindeelement (66) des Anbindeteils (62) hindurchführbar ist.

5. Schienenanbindesystem nach Anspruch 4, **dadurch gekennzeichnet, dass** die Durchführöffnung (65) ein Langloch ist, dessen Längserstreckung parallel zu einer von dem Anlageabschnitt (63) zu dem Halteabschnitt (64) verlaufende Richtung verläuft.

6. Schienenanbindesystem nach Anspruch 5, **dadurch gekennzeichnet, dass** der Schaft (71) an einander gegenüberliegenden Seiten mit einer Abflachung (72) versehen ist und der Abstand (A) dieser Abflachungen (72) zueinander maximal der Breite (E) der Durchführöffnung (65) im Anbindeelement (66) entspricht.

7. Schienenanbindesystem nach einem der Ansprüche 4 bis 6, **dadurch gekennzeichnet, dass** von dem Anlageabschnitt (83) zwei Umgreifabschnitte (87) zum bereichsweisen Umgreifen zweier einander gegenüberliegenden Aussenränder (93) der Montageschiene (92) vorgesehen sind, deren lichter Abstand zumindest dem Abstand (F) dieser Ränder (93) der Montageschiene (92) entspricht.
